# EUROPEAN PATENT SPECIFICATION

(11) **EP 0 705 630 B1**
(45) Date of publication and mention of the grant of the patent: **23.07.1997**
(21) Application number: 95202652.4
(22) Date of filing: 03.10.1995
(51) Int. Cl.: B01D 3/38, B01D 3/42, G01N 25/14, B01L 7/00

(54) **Distilling apparatus with controlled vapour flow**
Destillationsvorrichtung mit geregeltem Dampfstrom
Dispositif de distillation avec courant de vapeur contrôlé

(30) Priority: 05.10.1994 IT MI940663 U
(43) Date of publication of application: 10.04.1996
(73) Proprietor: VELP SCIENTIFICA srl, 20040 Usmate (Milano) (IT)
(72) Inventor: Passoni, Ermete, I-20059 Vimercate (Milano) (IT)
(74) Representative: Faraggiana, Vittorio, Dr. Ing.

(56) References cited:
- DE-A- 4 335 760
- US-A- 5 022 967

## Description

This invention refers to a steam distilling apparatus for laboratory analyses.

In the known technology there are well-known laboratory stills in which a flow of steam is conveyed through the liquid to be distilled and the outgoing gaseous flow is then recondensed to obtain the distilled liquid on which to carry out the subsequent analyses, such as for example protein determination.

For analysis requirements, the quantity of steam which passes through the liquid must be accurately measured. As a rule, use is made of boiler-type vaporizers which produce steam in non-defined quantities which is then sent to the liquid to be distilled through measuring means which measure the flow of steam. However, due to the difficulty in accurately measuring the quantity of water in a flow of steam, there are inaccuracies which negatively affect the subsequent analyses.

Moreover, the measuring means are usually complicated, expensive and delicate, and bear quite heavily on the cost of the apparatus and on the need for periodical maintenance.

The general scope of this invention is to obviate the aforementioned problems by providing a steam distilling apparatus in which the quantity of steam is accurately established, without making use of expensive means for its direct measurement.

This scope is achieved according to the invention by providing an apparatus utilizing a stream of vapour for distilling liquids comprising a water vaporizing unit connected so as to send vapour to a unit which diffuses the vapour through a liquid to be distilled, the diffusion unit collecting the gaseous flow produced and conveying it to a recondensation unit from which the distilled fluid is collected, characterized by the fact that the vaporizing unit comprises between its water inlet and its vapour outlet, a coil in thermal contact with an electric heating element to enable it to be kept at a temperature to vaporize all the water running through it, the water being fed to the inlet of the coil by means of a displacement pump.

The dependent claims contain prefered embodyments.

The innovative principles of this invention and its advantages with respect to the known technique will be more clearly evident from the following description of a possible exemplificative and non-restrictive embodiment applying such principles, with reference to the single accompanying drawing, in which:

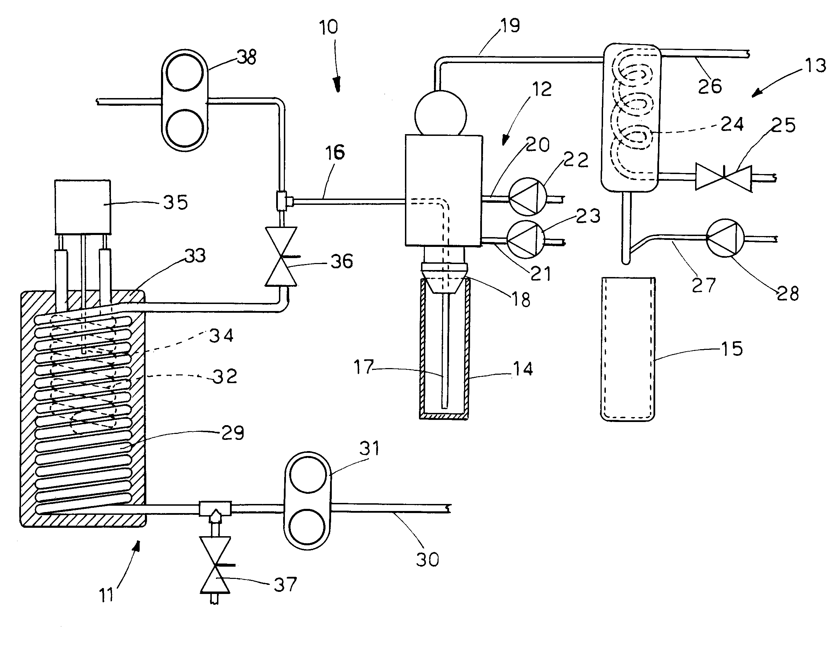

The figure schematically shows a steam distilling apparatus made according to the invention, generically indicated by reference 10. This still 10 comprises a steam generating unit, generically indicated by reference 11, from which the steam is sent, through a valve 36 and a duct 16, to a known diffusion unit 12 blowing the steam through a liquid to be analysed contained in a vessel 14. The gaseous flow obtained is subsequently sent to a known condensation unit 13, so that the condensates can be collected in a vessel 15, ready for the subsequent analyses.

The insufflation unit 12 comprises a steam emission duct 17 protruding from a plug element 18 which forms a seal over the mouth of the vessel 14. The plug 18 also forms a connection with a duct 19 which conveys the gaseous flow to the condenser 13. The insufflation unit can also comprise ducts 20, 21 which introduce fluids into the vessel 14, if necessary by means of pumps 22, 23.

The condenser can be of any known type and for example can comprise a cooling coil 24 supplied, through a valve 25, with cooling water, which is subsequently discharged through an evacuation duct 26. If necessary, the condensers can be supplied with additional substances, for example substances required for the analysis, through a duct fed by a pump 28.

The apparatus described up to this point is substantially of known technique.

According to the principles of this invention, the steam generating unit 11 is achieved by means of a coil 29 which is fed with a flow of water drawn from a source 30.

The flow of water is sent to the coil by means of a known displacement pump 31 with a variable delivery. The coil is heated by an electric element 32 thermically connected to it. To ensure optimal heat exchange between the heating element and coil both are incorporated in a monobloc 33 of material with high thermal conductivity, such as for example a metal casting. The electric heating element is inserted coaxial to the coil. The latter is advantageously made in a cylindrical helical shape, just as the heating element can also be made in the same shape.

The electric heating element 32 is supplied with power by a known temperature regulator 35 controlled by a temperature sensor 34 situated at the centre of the monobloc, thereby ensuring precise control of the temperature of the coil.

The temperature of the monobloc is regulated so as to ensure vaporization of the water running through the coil under the action of the displacement pump 31 and to consequently obtain, at the outlet end of the coil, a flow of steam directly depending upon the quantity of water sent by the displacement pump.

The quantity of steam can thus be regulated with the utmost precision by simply adjusting the delivery of the pump 31.

Advantageously disposed upstream to the coil 29 is a discharge valve 37 and disposed downstream to the coil is a pump 38 so as to be able to discharge the water from the coil and evacuate any residues, between one use of the apparatus and the next.

At this point it will be clear that the intended scopes have been achieved by providing a distilling apparatus with a relatively simple, inexpensive and sturdy structure which makes it possible to achieve a high degree of precision in the supply of steam, so as to ensure a high degree of accuracy of the analyses.

A further advantage of a vaporizing unit according to the invention is that of having reduced the time required to reach working conditions, the water being instantly vaporized as required, unlike the known apparatuses where large quantities of water must be brought to boiling point before being able to obtain even the slightest flow of steam.

The foregoing description of an embodiment applying the innovative principles of this invention is obviously given by way of example in order to illustrate such innovative principles and should not therefore be understood as a limitation to the sphere of the invention claimed herein. For example, the general hydraulic system of the apparatus can differ from the one described and can comprise further fluid inlets or outlets, according to particular practical requirements.

## Claims

1. Apparatus utilizing a stream of vapour for distilling liquids comprising a water vaporizing unit (11) connected so as to send vapour to a unit (12) which diffuses the vapour through a liquid to be distilled; the diffusion unit (12) collecting the gaseous flow produced and conveying it to a recondensation unit (13) from which the distilled fluid is collected, characterized by the fact that the vaporizing unit (11) comprises between its water inlet and its vapour outlet, a coil (29) in thermal contact with an electric heating element (32) to enable it to be kept at a temperature to vaporize all the water running through it, the water being fed to the inlet of the coil (29) by means of a displacement pump (31).

2. Apparatus as claimed in claim 1, characterized by the fact that the coil (29) and electric heating element (32) are incorporated in a block (33) of thermally conductive material.

3. Apparatus as claimed in claim 2, characterized by the fact that the electric heating element (32) is disposed concentric to the coil.

4. Apparatus as claimed in claim 1, characterized by the fact that the electric heating element (32) is fed by a regulator (35) controlled by a temperature sensor (34) in thermal contact with the coil (29) to maintain the coil at a pre-established temperature.

5. Apparatus as claimed in claims 3 and 4, characterized by the fact that the sensor (34) is incorporated in the block in an axial position to the coil (29).

6. Apparatus as claimed in claim 1, characterized by the fact that disposed between the inlet to the coil (29) and the displacement pump (31) is a valve (37) for controlled discharge of the system.

7. Apparatus as claimed in claim 1, characterized by the fact that disposed at the outlet to the coil (29) is a pump (38) for controlled evacuation of the system.

8. Apparatus as claimed in claim 1, characterized by the fact that the displacement pump (31) has a delivery which is variable on command to regulate the quantity of water fed, in order to vary the flow of steam delivered by the vaporizing unit.

## Patentansprüche

1. Vorrichtung, die einen Dampfstrom zum Destillieren von Flüssigkeiten verwendet und die eine Wasserverdampfungseinheit (11) aufweist, die derart verbunden ist, daß Dampf einer Einheit (12) zugeführt wird, die den Dampf durch eine zu destillierende Flüssigkeit verteilt, wobei die Diffusionseinheit (12) den erzeugten, gasförmigen Fluß sammelt und ihn einer Wiederkondensationseinheit (13) zuführt, von der aus das destillierte Fluid gesammelt wird, gekennzeichnet durch das Merkmal, daß die Verdampfungseinheit (11) zwischen ihrem Wassereinlaß und ihrem Dampfauslaß eine Rohrschlange (29) in Wärmeberührung mit einem elektrischen Heizelement (32) aufweist, damit sie auf einer Temperatur gehalten wird, bei der das gesamte, durch sie hindurchlaufende Wasser verdampft, wobei das Wasser dem Einlaß der Rohrschlange (29) mittels einer Verdrängungspumpe (31) zugeführt wird.

2. Vorrichtung nach Anspruch 1, dadurch gekennzeichnet, daß die Rohrschlange (29) und das elektrische Heizelement (32) in einem Block (33) aus wärmeleitendem Material untergebracht sind.

3. Vorrichtung nach Anspruch 2, dadurch gekennzeichnet, daß das elektrische Heizelement (32) konzentrisch zu der Rohrschlange angeordnet ist.

4. Vorrichtung nach Anspruch 1, dadurch gekennzeichnet, daß das elektrische Heizelement (32) durch einen Regler (35) gespeist wird, der von einem Temperatursensor (34) in Wärmeberührung mit der Rohrschlange (29) gesteuert wird, um die Rohrschlange auf einer vorbestimmten Temperatur zu halten.

5. Vorrichtung nach den Ansprüchen 3 und 4, dadurch gekennzeichnet, daß der Sensor (34) in dem Block in einer axialen Stellung zu der Rohrschlange (29) untergebracht ist.

6. Vorrichtung nach Anspruch 1, dadurch gekennzeichnet, daß ein Ventil (37) für eine gesteuerte Entladung des Systems zwischen dem Einlaß der Rohrschlange (29) und der Verdrängungspumpe (31) angeordnet ist.

7. Vorrichtung nach Anspruch 1, dadurch gekennzeichnet, daß eine Pumpe (38) zur gesteuerten Entleerung des Systems am Auslaß der Rohrschlange (29) angeordnet ist.

8. Vorrichtung nach Anspruch 1, dadurch gekennzeichnet, daß die Verdrängungspumpe (31) einen Liefergrad hat, der auf Befehl variabel ist, um die Zugeführte Wassermenge zu regeln, damit der von der Verdampfungseinheit gelieferte Dampfstrom geändert wird.

## Revendications

1. Dispositif utilisant un flux de vapeur pour distiller des liquides, comportant une unité d'évaporation d'eau (11) connectée de manière à envoyer de la vapeur vers une unité (12) qui diffuse la vapeur à travers un liquide à distiller ; l'unité de diffusion (12) collectant l'écoulement gazeux produit et le transportant vers une unité de recondensation (13) à partir de laquelle le fluide distillé est collecté, caractérisé en ce que l'unité d'évaporation (11) comporte entre son entrée d'eau et sa sortie de vapeur un serpentin (29) en contact thermique avec un élément chauffant électrique (32) pour lui permettre d'être maintenu à une température destinée à vaporiser toute l'eau y circulant, l'eau étant fournie à l'entrée du serpentin (29) par une pompe volumétrique (31).

2. Dispositif selon la revendication 1, caractérisé en ce que le serpentin (29) et l'élément chauffant électrique (32) sont incorporés dans un bloc (33) constitué d'un matériau thermiquement conducteur.

3. Dispositif selon la revendication 2, caractérisé en ce que l'élément chauffant électrique (32) est disposé concentriquement au serpentin.

4. Dispositif selon la revendication 1, caractérisé en ce que l'élément chauffant électrique (32) est alimenté par un régulateur (35) commandé par un détecteur de température (34) en contact thermique avec le serpentin (29) pour maintenir le serpentin à une température préétablie.

5. Dispositif selon les revendications 3 et 4, caractérisé en ce que le détecteur (34) est incorporé dans le bloc dans une position axiale par rapport au serpentin (29).

6. Dispositif selon la revendication 1, caractérisé en ce qu'une vanne (37) est disposée entre l'entrée du serpentin (29) et la pompe volumétrique (31) pour obtenir une vidange commandée du système.

7. Dispositif selon la revendication 1, caractérisé en ce qu'une pompe (38) destinée à la vidange commandée du système est disposée au niveau de la sortie du serpentin (29).

8. Dispositif selon la revendication 1, caractérisé en ce que la pompe volumétrique (31) a un débit de sortie qui est variable sur commande pour réguler la quantité d'eau fournie, afin de faire varier l'écoulement de vapeur envoyé par l'unité d'évaporation.
